Europäisches Patentamt

European Patent Office

Office européen des brevets

(11) Publication number: **0 260 639**
**A2**

(12) **EUROPEAN PATENT APPLICATION**

(21) Application number: **87113402.9**

(22) Date of filing: **14.09.87**

(51) Int. Cl.⁴: **G06F 9/26**

(30) Priority: **18.09.86 JP 218011/86**

(43) Date of publication of application:
**23.03.88 Bulletin 88/12**

(84) Designated Contracting States:
**DE FR GB**

(71) Applicant: **Kabushiki Kaisha Toshiba**
**72, Horikawa-cho Saiwai-ku**
**Kawasaki-shi Kanagawa-ken 210(JP)**

(72) Inventor: **Kishigami, Hidechika c/o Patent**
**Division**
**Kabushiki Kaisha Toshiba 1-1 Shibaura**
**1-chome**
**Minato-ku Tokyo 105(JP)**
Inventor: **Kamiya, Shigeo c/o Patent Division**
**Kabushiki Kaisha Toshiba 1-1 Shibaura**
**1-chome**
**Minato-ku Tokyo 105(JP)**

(74) Representative: **Henkel, Feiler, Hänzel &**
**Partner**
**Möhlstrasse 37**
**D-8000 München 80(DE)**

(54) **Microprogram sequencer.**

(57) A microprogram sequencer for performing access control of a microprogram memory (18) which stores a plurality of microprogram sequences each of which consists of specific microinstructions. The microprogram sequencer has a first address register (50) for storing the first address information, which designates that memory location of the microprogram memory (18) at which the initial microinstruction of one of the microprogram sequences is preset. The sequencer further has an address generator (54, 56, 52, 60) and a multiplexer (58). The address generator comprises an address memory (54), a multiplexer (56), a second address register (52), and an address counter (60). Address generator generates second address information in accordance with the first address information supplied from the first address register (50). The second address information designates that memory location of the microprogram memory (18) at which a microinstruction subsequent to the initial microinstruction is preset. The multiplexer (58) receives the address information stored in the first address register (50) and the second address information generated by address generator (54, 56, 52, 60), and selects and supplies one of these input address information items to the microprogram memory (18).

FIG. 4

## Microprogram sequencer

The present invention relates to a microprogrammed data processing system, and more particularly, to a microprogram sequencer for performing access control of the microprogram memory used in the system.

Most of today's small data-processing systems are designed using a technique called "microprogramming". In a microprogram-controlled or microprogrammed data-processing system, a large portion of the system's control is performed by a read-only memory, rather than by large arrays of gates and flip-flops.

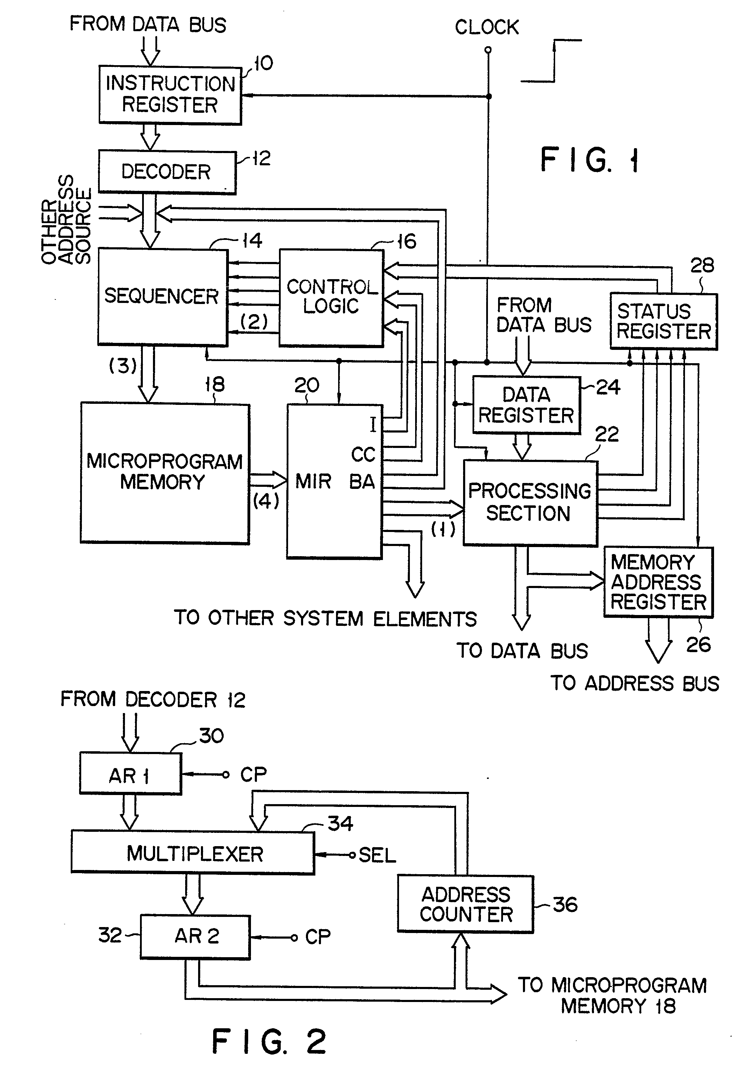

Fig. 1 shows the structure of a typical, microprogram-controlled data-processing system. This system is disclosed and described in detail in The Am 2900 Family Data Book with Related Support Circuits, Advanced Micro Devices, Inc., 1979. Roughly speaking, this system comprises two major components, i.e., data manipulation circuitry and control circuitry for controlling the data manipulation circuitry. The control circuitry includes instruction register 10, decoder 12, microprogram sequencer 14, control logic 16, microprogram memory 18, and microinstruction register 20. The data manipulation circuitry includes processing section 22, data register 24, memory address register 26, and status register 28.

Processing section 22 of the data manipulation circuitry comprises a decoder, an ALU, scratchpad registers, a data-steering logic, a left/right shift control, and a carry lookahead circuit. Data is processed by moving it from a main memory (not shown) into the registers of processing section 22 via data register 24, performing the required operations on this data and returning the result to the main memory. Memory addresses may also be generated in processing section 22 and sent out to memory address register 26. Processing section 22 also supplies status bits after each operation has been carried out. These status bits are captured in status register 28.

Decoder 12 of the control circuitry comprises a PROM or a PLA. The PROM used in decoder 12 is specifically called a "mapping ROM". Microprogram memory 18 is usually a PROM and contains long words known as "microinstructions". These control the entire data-processing system and each contains bits to control each of the data manipulation elements in the system. There are, for example, bits for the instruction lines dedicated to processing section 22; bits for the addresses of the RAM located within processing section 22; bits to control the shifting multiplexers located at the ends of processing section 22; and bits to control the enable gates on instruction register 10, memory address register 26, and various bus transceivers. When the bits in a microinstruction are applied to all the data manipulation elements and everything is clocked, then one small operation (such as a data transfer or a register-to-register addition) will be performed.

In this data-processing system, one machine code instruction is performed by executing several microinstructions in sequence. To this end, each microinstruction contains not only the bits to control the data hardware, but also bits to define the location, within the microprogram memory, of the next microinstruction to be executed. Microinstruction register 20 has field I, field CC, and field BA. Field I is used to control microprogram sequencer 14, and indicates where the next address is located, in an address register, a microprogram counter, a stack, or a direct input, and also indicates whether the stack has been pushed or popped. Field CC contains bits indicating the conditions under which field I applies. The bits contained in field CC are compared with the condition codes stored in status register 28 and may cause modification to field I. The comparing and modification occurs in control logic 16, which is frequently a PROM or a PLA. Field BA is a branch address or the address of a subroutine.

The address for the microinstructions is generated by microprogram sequencer 14, starting from a clock edge. This address goes from sequencer 14 to microprogram memory 18 and, an access time later, the microinstruction is at the output of memory 18.

Microinstruction register 20 is a register which has been placed on the output of microprogram memory 18 to essentially split the system into two sections. Register 20 contains the microinstruction currently being executed. (Refer to the arrow (1) in Fig. 1.) The data manipulation control bits go out to the system elements, and a portion of the microinstruction is returned to sequencer 14, as is shown by arrow (2), thereby determining the address of the next microinstruction to be executed. The address of the next microinstruction is sent to microprogram memory 18, as is shown by arrow (3). The next microinstruction sits at the input of microinstruction register 20, as is shown by arrow (4). So, while processing section 22 is executing one microinstruction, the next microinstruction is being fetched from microprogram memory 18.

Fig. 2 shows the structure of microprogram sequencer 14 of the prior art. As is shown in this figure, sequencer 14 has address registers 30 and 32, multiplexer 34, and address counter 36. Though not illustrated in Fig. 2, sequencer 14 further comprises a stack and a stack pointer. Address register 30 receives address data from mapping decoder 12. Multiplexer 34 receives items of address data from address register 30, address counter 36, part of instruction register 10, and the stack, and selects one of these address data items. For the sake of simplicity, the address data items other than those supplied from register 30 and counter 36 are not illustrated in Fig. 2. Address register 32 stores the address data selected by multiplexer 34. This address data is sent to address counter 36. In address counter 36, "1", for example, is added to the address data. Address counter 36 thus serves as an incrementer.

When a machine code instruction is supplied from a main memory (not shown) to decoder 12 via instruction register 10, decoder 12 designates one of the memory locations within microprogram memory 18. More precisely, decoder 12 generates address data which indicates the address of the initial microinstruction of microprogram sequence, which corresponds to the machine code instruction. (The microprogram sequence is a set of sequential microinstructions required in performing one machine code instruction.) The address data generated by decoder 12 is supplied to sequencer 14. Address register 30 of sequencer 14 stores the address data, and then supplies it to multiplexer 34. Multiplexer 34 selects one of the input address data items, under the control of control logic 16. First, control logic 16 causes multiplexer 34 to select the address data supplied from address register 30. Then, it causes multiplexer 34 to select the address data supplied from address counter 36. While one program sequence is being executed, the selection is not changed except for the time when a special address such as a branch address is supplied to the multiplexer 34. Control logic 16 causes multiplexer 34 to select the address data supplied from address register 30, in response to a special microinstruction, such as an END instruction, representing the completion of the execution of one microprogram sequence. The contents of address register 30 will have been updated to the start address of the next microprogram sequence by means of pipeline processing, before multiplexer 34 selects the address data output from address register 30. The address data selected by multiplexer 34 is stored in address register 32, and is supplied therefrom to microprogram memory 18. The microinstruction designated by this address data is read out from memory 18 and is stored in microinstruction register 20. Thereafter, it is supplied as a current instruction to processing section 22, and is also used for controlling control logic 16 and other elements in the system.

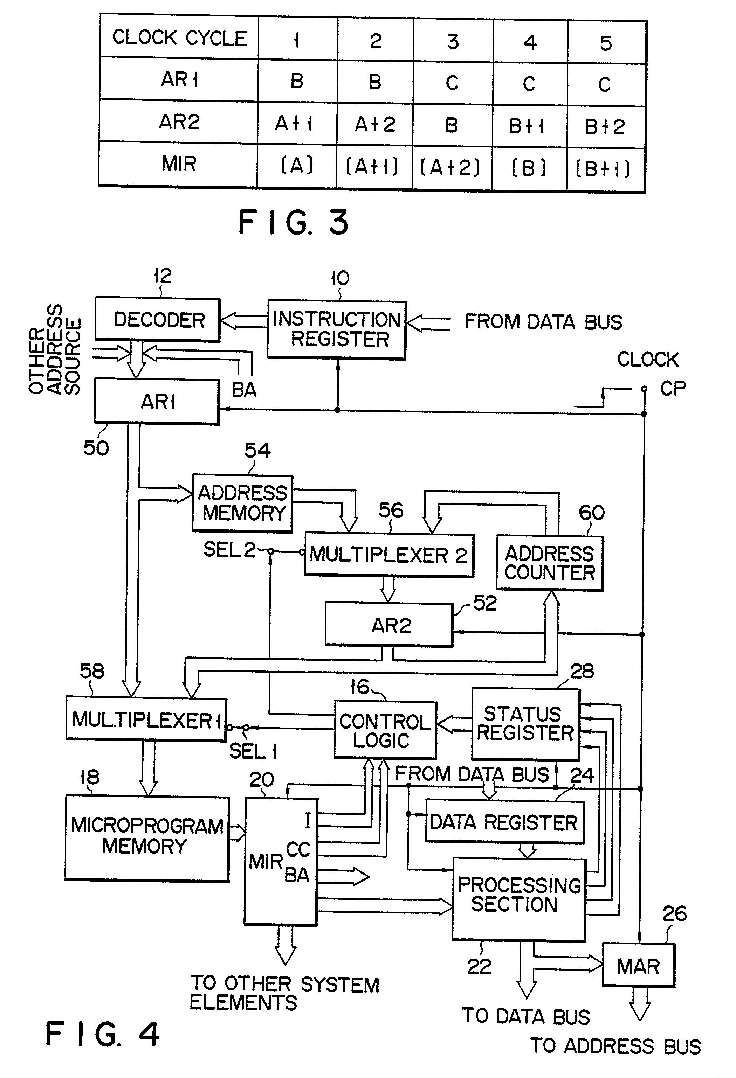

With reference to Fig. 3, the relationship between the contents of registers 30, 32, and 20, and the clock cycles adopted in the data-processing system shown in Fig. 1 will now be explained. Assume that three machine code instructions INS-A, INS-B, and INS-C are sequentially performed, and that it suffices to execute only two microinstructions for the emulation of each machine code instruction. More specifically, machine code instruction INS-A is performed by executing microinstructions [A] and [A + 1]; machine code instruction INS-B is performed by executing microinstructions [B] and [B + 1]; and machine code instruction INS-C is performed by executing microinstructions [C] and [C + 1]. Microinstructions [A] and [A + 1] are stored at the sequential memory locations of addresses A and A + 1, respectively, and constitute the first microprogram sequence. Microinstructions [B] and [B + 1] are stored at the sequential memory locations of addresses B and B + 1, respectively, and constitute the second microprogram sequence. Microinstructions [C] and [C + 1] are stored at the sequential memory locations of addresses C and C + 1, respectively, and constitute the third microinstruction sequence.

Microinstruction [A] is executed in clock cycle 1. Address register (AR1) 30, address register (AR2) 32, and microinstruction register (MIR) 20 store various items of data during clock cycles 1, 2, and 3, as will be specified below:
During clock cycle 1:
  AR1: The address data supplied from decoder 12.
This address data represents the start address B of the second microprogram sequence.
  AR2: The address data supplied from address counter 36 via multiplexer 34. This address data has been provided by adding "1" to start address A of the first microprogram sequence, and hence represents [A + 1].
  MIR: Microinstruction [A] read out from address A within microprogram memory 18. During clock cycle 2:

  AR1: The address data supplied from decoder 12.
This address data represents start address B of the second microprogram sequence.
  AR2: The address data supplied from address counter 36 via multiplexer 34. This address data represents address A + 2, provided by adding "1" to address A + 1.
  MIR: Microinstruction [A + 1] read out from address A + 1 within microprogram memory 18. During clock cycle 3:

AR1: The address data supplied from decoder 12.

This address data represents start address C of the third microprogram sequence.

AR2: The address data supplied from address register (AR1) 30 via multiplexer 34. This address data represents start address B of the second microprogram sequence.

MIR: Microinstruction [A + 2] read out from address A + 2 within microprogram memory 18.

AR2, AR1, and MIR store similar items of data also during clock cycles 4 and 5.

The conventional microprogrammed data-processing system does, however, have the following drawbacks:

During clock cycle 2, address register 32 is accessing address A + 2 of microprogram memory 18, while microinstruction [A + 1], i.e., the END instruction is executed for the completion of the first microprogram sequence. Therefore, meaningless data, that is to say microinstruction [A + 2], is unnecessarily read out from address A + 2, and is then stored in microinstruction register (MIR) 20 during clock cycle 3. In order to prevent processing section 22 from operating erroneously during clock cycle 3, a "no-operation" instruction is stored as the microinstruction [A + 2], or else a data manipulation circuitry is provided which is responsive to microinstruction [A + 1] i.e., the END instruction, and disables processing section 22 during the next clock cycle. As a result, processing section 22 is unable to execute microinstruction [B] during clock cycle 3, and can do so only when the next clock cycle, i.e., clock cycle 4, starts. In other words, one clock cycle is wasted, between the completion of execution of one machine code instruction and the start of execution of the next machine code instruction, to switch one microprogram sequence to another microprogram sequence. This waste of a clock cycle is detrimental to the high-speed operation of the data-processing system. The more machine code instructions the system executes, the lower the operating speed of the system.

The object of the present invention is to provide a microprogram sequencer for use in a microprogrammed data-processing system, which can efficiently read out microinstructions since it does not remain in a wait condition between the end of execution of one machine code instruction and the start of execution of the next machine code instruction.

According to the present invention, there is provided a microprogram sequencer for performing access control of a microprogram memory which stores a plurality of microprogram sequences each consisting of specific microinstructions. The microprogram sequencer has an address register for storing first address information or data, designating that location of the microprogram memory at which the initial microinstruction of one of the microprogram sequences is preset; an address generator connected to the address register, for generating second address information, designating that location of the microprogram memory at which a subsequent microinstruction to the initial microinstruction is preset; and a selector connected to the address register and the address generator, for selecting the first address information or the second address information, and accessing the microprogram memory, in accordance with the selected address information.

In the microprogram sequencer of this invention, the first address information, if stored in the address register, is supplied from the address register to the address generator. The address generator generates second address information, which designates that memory location of the microprogram memory at which a subsequent microinstruction to the initial microinstruction is preset. The selector receives the first address information stored in the address register, and the second address information generated by the address generator. The selector selects one of the first address information and the second address information is selected. The selected one is supplied from the selector to the microprogram memory. When the content of the address register, i.e., the first address information, is renewed, the new first address information can be supplied to the microprogram memory, regardless of whether or not the address generator generates the second address information.

This invention can be more fully understood from the following detailed description when taken in conjunction with the accompanying drawings, in which:

Fig. 1 is a block diagram showing a typical microprogrammed data-processing system of the prior art;

Fig. 2 is a block diagram showing the structure of the microprogram sequencer used in the system shown in Fig. 1;

Fig. 3 is a diagram explaining the operation of the microprogrammed data-processing system which has a microprogram sequencer as shown in Fig. 2;

Fig. 4 is a block diagram illustrating a microprogrammed data-processing system according to one embodiment of the present invention;

Fig. 5A is a table showing the microprogram sequences stored in the microprogram memory of the system shown in Fig. 4, the microinstructions included in each microprogram sequence, and the addresses of these microinstructions;

Fig. 5B is a diagram showing the microinstructions preset in part of the microprogram memory shown in Fig. 4;

Fig. 5C shows the address data set in part of the address memory shown in Fig. 4; and

Fig. 6 is a timing chart explaining the operation of the microprogrammed data-processing system shown in Fig. 4.

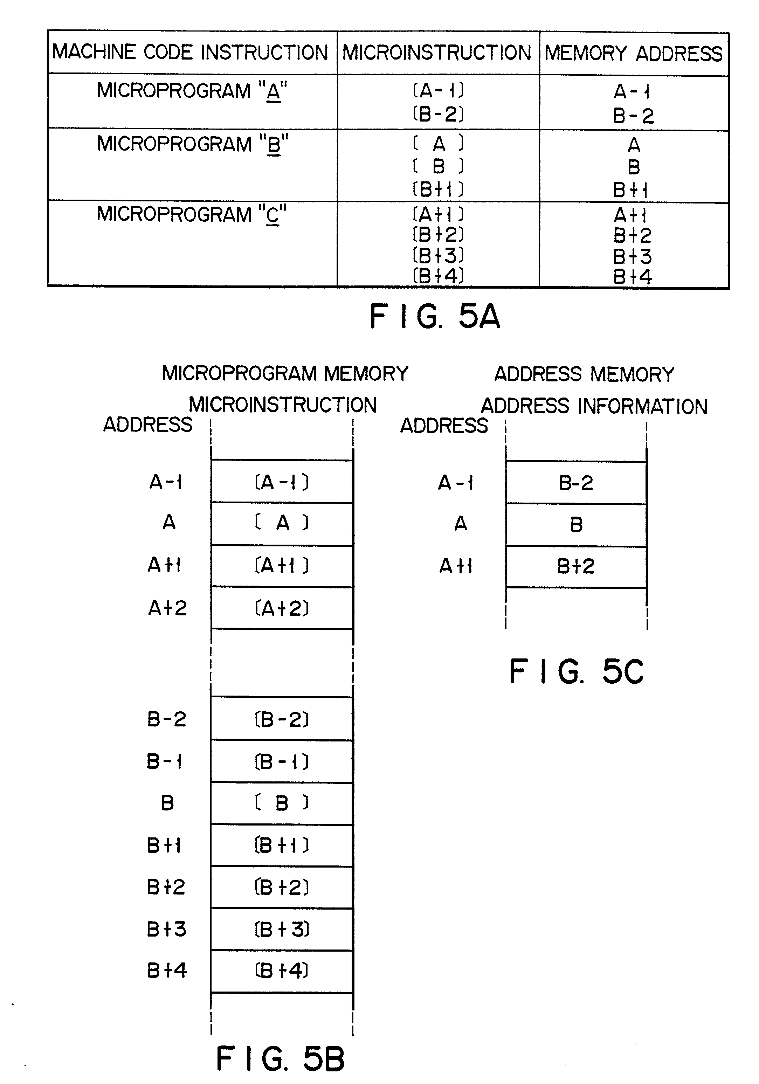

One embodiment of the invention will now be described, with references to Figs. 4, 5A, 5B, and 5C. Fig. 4 is a block diagram showing a microprogrammed data-processing system according to the present invention. This system is identical to the system illustrated in Fig. 1, except for one portion. In Fig. 4, the same components as those shown in Fig. 1 are designated by the same numerals, and will not described in detail. In the data-processing system of Fig. 4, machine code instructions are performed by sequentially executing a plurality of microprogram sequences. Each microprogram sequence is made of at least one microinstruction. In this embodiment, each microprogram sequence consists of a plurality of microinstructions. The microprogram sequences are preset in microprogram memory 18. The microinstructions are selectively read out from microprogram memory 18 under the access control of a microprogram sequencer.

The microprogram sequencer of this system is different in structure from the sequencer shown in Fig. 2. System clocks are supplied to clock terminal CP. Some of the output signals of control logic 16 are supplied as first and second selection signals to control terminals SEL1 and SEL2, respectively. The microprogram sequencer has address registers 50 and 52, address memory 54, multiplexers 56 and 58, and address counter 60. The sequencer further comprises a stack and a stack pointer, which are not shown in Fig. 4 for the sake of simplicity. Address register 50 receives first address information from decoder 12. The first address information designates that memory location of microprogram memory 18 at which the initial microinstruction of one of the microprogram sequences is stored. Register 50 stores the first address information, in response to a system clock. The first address information is supplied from address register 50 to address memory 54. Address memory 54 has memory locations the number of which is equal to or greater than the number of the microprogram sequences. Items of address information are preset in address memory 54. These items of address information designate those memory locations of microprogram memory 18 at which second microinstructions of the microprogram sequences are preset. When the first address information is supplied to address memory 54, one of the address information items preset in address memory 54 is read out from memory 54. The address information thus read out from memory 54 designates that memory location of microprogram memory 18 where the second microinstruction of the microprogram sequence corresponding to the first address information is preset. Multiplexer 56 has input ports for receiving the items of address information from address memory 54, address counter 60, part (not shown) of instruction register 10, and the stack (not shown). In Fig. 4, the address information items other than those supplied from address memory 54 and address counter 60 are not illustrated. Multiplexer 56 receives the selection signal supplied from control terminal SEL2, and selects one of the input address information items under the control of this selection signal. The number of bits of control terminal SEL2 is increased, if necessary, in accordance with the number of the address information items input to multiplexer 56. The selected address information item is supplied from multiplexer 56 to address register 52. This address information item is used as the second address information for designating one of the memory locations of memory 18, at which the microinstructions subsequent to the second microinstruction of the microprogram sequence corresponding to the first address information item stored in address register 50 are preset. Address register 52 stores the second address information in response to a system clock. The second address information is supplied to multiplexer 58 and also to address counter 60. Address counter 60 increments the value of the second address information by, for example, "1". The address information thus incremented is supplied to multiplexer 56, for designating the memory location at which the next microinstruction is preset.

Meanwhile, the first address information and the second address information are supplied from address register 50 and address register 52 to multiplexer 58. The selection signal is input to multiplexer 58 from control terminal SEL1. Under the control of this selection signal, multiplexer 58 selects the first or second address information. The address information selected by multiplexer 58 is supplied to microprogram memory 18. The microinstruction is thereby read out from the location of memory 18, which has been designated by the address information. This microinstruction is supplied to microinstruction register 20, and therefrom to processing section 22 and control logic 16. Processing section 22 decodes a part of the microinstruction, and performs a specified operation. Control logic 16 decodes another part of the instruction, and controls the microprogram sequence.

When the final instruction of each microprogram sequence, that is, when an END instruction is set in microinstruction register 20, control logic causes multiplexers 56 and 58 to update the address information. More specifically, multiplexer 58 selects the first address information in the clock cycle next to the clock cycle during which the END instruction has been set in microinstruction register 20, and selects the second address information in any other clock cycles. On the other hand, multiplexer 56 selects the address information from address memory 54 in the clock cycle next to the clock cycle during which the END instruction has been set in register 20, and selects the address information from address counter 60 in any other clock cycles.

The operation of the microprogrammed data-processing system shown in Fig. 4 will now be explained. Any machine code instruction, that has been stored in instruction register 10, is supplied to decoder 12. Decoder 12 produces the address information about the initial microinstruction of the microprogram sequence corresponding to the machine code instruction. The address information is supplied to address register 50. Address register 50 stores this address information. The address information is subsequently supplied from register 50 to multiplexer 58. Multiplexer 58 selects this address information and input it to microprogram memory 18. As a result, the initial microinstruction is read out from memory 18 and supplied to microinstruction register 20. Register 20 stores this microinstruction and supplies it to processing section 22. Processing section 22 receives and executes the initial microinstruction.

The address information about the initial microinstruction is also supplied from address register 50 to address memory 54. The address information about the second microinstruction is read out from address memory 54, while the initial microinstruction is being read out from microprogram memory 18. The address information about the second microinstruction is input to multiplexer 56. Multiplexer 56 selects and supplies this address information to address register 52. Register 52 stores the address information about the second microinstruction at the same time when microinstruction register 20 stores the initial microinstruction. The address information about the second microinstruction is supplied from register 52 to multiplexer 58, and thus selected by multiplexer 58. It is then supplied to microprogram memory 18. The second microinstruction is thereby read out from memory 18 while the first microinstruction is being supplied from register 20 to processing section 22 and subsequently executed by section 22. The second microinstruction is stored in microinstruction register 20, and subsequently supplied to processing section 22 and executed thereby.

The address information about the second microinstruction, which has been stored in address register 52, is also input to address counter 60. Address counter 60 increments the value of this address information by "1". The address information, thus incremented, designates the next instruction, i.e., the third microinstruction. This address information is supplied to multiplexer 56. Multiplexer 56 selects the address information about the third microinstruction and supplies it to address register 52. Address register 52 stores this address information at the time when microinstruction register 20 stores the second microinstruction. The address information about the third microinstruction is supplied to, and selected by, multiplexer 58. It is then supplied to microprogram memory 18. The third microinstruction is, therefore, read out from memory 18 and written into microinstruction register 20, while the second microinstruction is being supplied from microinstruction register 20 to processing section 22 and executed by section 22. The third microinstruction, thus written in register 20, is supplied to processing section 22 and executed thereby.

Every time the contents of address register 52 are changed, the count value of address counter 60 increases by "1". Hence, as the count value of address counter 60 gradually increases, the microinstructions following the third are read out from microinstruction memory 18 and subsequently executed.

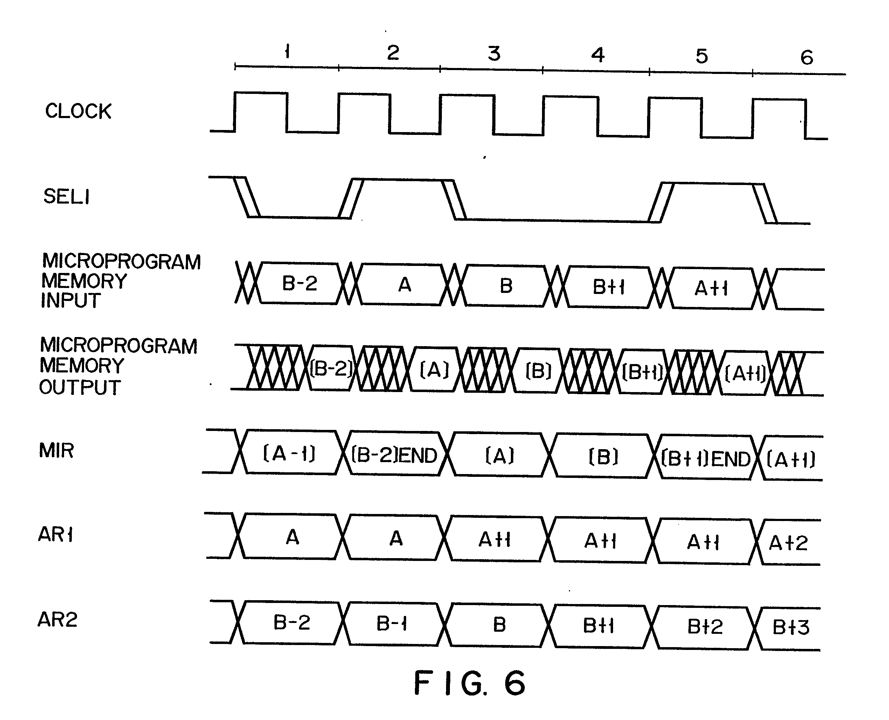

With reference to Figs. 5A to 5C and Fig. 6, it will be explained how the microinstruction sequences are switched.

Fig. 5A is a table showing three microprogram sequences "A", "B", and "C". Microprogram sequence "A" consists of two microinstructions [A-1] and [B-2] to be stored in the memory locations of addresses A-1 and B-1. Microprogram sequence "B" consists of microinstructions [A], [B], and [B + 1] to be stored in the memory locations of addresses A, B, and B + 1. Microprogram sequence "C" consists of microinstructions [A + 1], [B + 2], [B + 3], and [B + 4] to be stored in the memory locations of addresses A + 1, B + s, B + 3, and B + 4. Final microinstructions [B-2], [B + 1], and [B + 4] are END instructions for terminating the execution of the three microprogram sequences. Fig. 5B is a - schematical representation of the microinstructions of microprogram sequences "A", "B", and "C", which are preset in microprogram memory 18. Fig. 5C is also a schematic representation of a plurality of the address information items preset in address memory 54. The address information items preset in memory 54 represent those locations of microprogram memory 18 at which the second microinstructions of microprogram sequences are preset. These information items are preset in those memory locations of memory 54, which have addresses corresponding to those of the memory locations of microprogram memory 18 at which the initial microinstructions of microprogram sequences "A", "B", and "C" are preset. In order to execute microprogram sequence "A" in response to the first machine code instruction, address register 50 supplies address memory 54 with address information A-1 designating that location of microprogram memory 18 at which initial microinstruction [A-1] of microprogram sequence "A" is preset. In this case, that location of address memory 54, which has address information B-2, is accessed, and address information B-2 is read out from microprogram memory 54. Address information B-2 represents the location of microprogram memory 18, at which second microinstruction [B-2] of microprogram sequence "A" is preset.

Fig. 6 is a timing chart illustrating the relationship between the clock cycles and the input and output information of microprogram memory 18, on the one hand, and the information items set in microinstruction register (MIR) s0, address register (AR1) 50, and address register (AR2) 52.

As shown in Fig. 6, microinstruction [A-1] of microprogram sequence "A" is set in microinstruction register 20 during clock cycle 1. Then, address information B-2 of the next microinstruction [B-2] is set in address register 52. Microinstruction [A-1] controls processing section 22. During clock cycle 1, the output information of address counter 60 is address information B-1 obtained by incrementing address information B-2 by "1". Microinstruction [A-1] is not the last microinstruction of microprogram sequence "A". Therefore, the potentials at control terminals SEL1 and SEL2 are at a low level during clock cycle 1. The signal supplied from terminal SEL1 causes multiplexer 58 to select the output information of address register 52, i.e., address information B-2. The signal supplied from terminal SEL2 causes multiplexer 56 to select the output information of address counter 60, i.e., address information B-1. As a result, microinstruction [B-2] is read out from microprogram memory 18 during clock cycle 1. This microinstruction is supplied to microinstruction register 20 during the last portion of clock cycle 1 and the first portion of clock cycle 2. Address register 50 stores address information A about the initial microinstruction of microprogram sequence "B" during clock cycle 1.

During clock cycle 2, address register 52 stores the output information of address counter 60, i.e., address information B-1, and microinstruction register 20 stores microinstruction [B-2]. Address register 50 keep storing address information A also during clock cycle 2. In other words, the contents of address register 50 remain unchanged during clock cycles 1 and 2. Microinstruction [B-2] controls processing section 22. This microinstruction is the last microinstruction of microprogram sequence "A", i.e., the END instruction. The potential at both control terminals SEL1 and SEL2 are, therefore, rises to a high level. The signal at the high level, which is supplied from terminal SEL1, causes multiplexer 58 to select the output information of address register 50, i.e., address information A. The signal at the high level, which is output from terminal SEL2, causes multiplexer 56 to select the output terminal of address memory 54, i.e., address information B. (The output information of address memory 54 is supplied to address register 52 during a period bridging clock cycles 2 and 3.) Microinstruction [A] is read out from microprogram memory 18 during clock cycle 2. It is supplied to microinstruction register 20 during a period bridging clock cycles 2 and 3.

During clock cycle 3, the output information of address memory 54, i.e., address information B is set in address register 52, and microinstruction [A] is set in microinstruction register 20. Address register 50 stores address information A + 1 about initial microinstruction [A + 1] of microprogram sequence "C", during clock cycle 3. Therefore, the contents of address register 50 change during a period bridging clock cycles 2 and 3. Microinstruction [A] controls processing section 22. Microinstruction [A] is not the last microinstruction of microprogram sequence "B", i.e., an END instruction. Hence, the potentials at both control terminals SEL1 and SEL2 fall to the low level. The signal supplied from terminal SEL1 causes multiplexer 58 to select the output information of address register 52, i.e., address information B. The signal supplied from terminal SEL2 causes multiplexer 56 to select the output information of address counter 60, i.e., address information B + 1. Microinstruction [B] is read out from microprogram memory 18 during clock cycle 3, and is supplied to microinstruction register 20 during the period bridging clock cycles 3 and 4.

During clock cycle 4, microinstruction [B] is set in microinstruction register 20, and executed by processing section 22 as in clock cycle 3. Microinstructions [B + 1], [A + 1], [B + 2], [B + 3], and [B + 4] are executed during clock cycles 5, 6, ..., in the same manner as in clock cycles 1, 2, 3, and 4.

As has been described, multiplexer 58 can select the output information items of address registers 50 and 52. Therefore, no wait or idle clock cycles are required in executing machine code instructions. For example, when final microinstruction [B-2] of microprogram sequence "A" is set in microinstruction register 20 during clock cycle 2, control logic 16 decodes this microinstruction [B-2], thereby causing multiplexer 58 to change the output address information. As a result, the output information of address register 50, i.e., the address information about initial microinstruction [A] of microprogram sequence "$\underline{B}$", is supplied to microprogram memory 18. Microinstruction [A] is thereby read out from memory 18. This microinstruction is set in microinstruction register 20 during clock cycle 3, and is executed by processing section 22 also during clock cycle 3. That is, in order to execute a plurality of microprogram sequences in response to machine code instructions, the final instruction of any of these microprogram sequences, and the first microinstruction of the next microprogram sequence can be read out from microprogram memory 18 during two consecutive clock cycles, respectively.

The data-processing system of the invention has another advantage. Generally, when decoder 12 is made of a programmable logic array (PLA), it is required that those locations of microprogram memory 18 at which the initial instructions of the microprogram sequences are to be preset should be first determined, and decoder 12 should then be designed, that is, the PLA should then be programmed. In the conventional system, decoder 12 must be modified if the location addresses of the initial microinstructions are changed in order to, for example, increase the number of the microinstructions of a specified microprogram sequence. Thus, with the conventional system, it is difficult to alter the location addresses of the microinstructions of microprogram sequences after decoder 12 has been designed. With the system of this invention, which is provided with address memory 54, the number of the microinstructions of a specified microprogram sequence can be increased or decreased without modifying decoder 12. It is true that initial microinstructions [A-1], [A], [A+1], [A+2], ... of microprogram sequences "$\underline{A}$", "$\underline{B}$", and "$\underline{C}$" must be preset in memory locations A-1, A, A+1, A+2, ... of microprogram memory 18 as is shown in Fig. 5B. However, they can be read out from microprogram memory 18 even if the number of the subsequent microinstructions of each microprogram sequence is changed.

In addition, the microprogrammed data-processing system of this invention can be programmed with a high efficiency. Once the location addresses of initial microinstructions have been determined, decoder 12 can be designed at the same time the microprogram sequences are programmed. In this case, the location address of the second microinstruction of each microprogram sequence is preset in address memory 54 after the microprogram sequence has been programmed.

Furthermore, the system of the invention can make an effective use of microprogram memory 18. Assume that two microprogram sequences consists of identical microinstructions, except for the initial microinstruction. If this is the case, the second to final microinstructions of one of these microprogram sequences need not be preset in microprogram memory 18. It suffices to preset the location addresses of the second microinstructions of these microprogram sequences in two specified memory locations of address memory 54. These memory locations correspond to those memory locations of microprogram memory 18 at which the first microinstructions of the microprogram sequences are preset.

As can be understood from the above, the present invention can provide a microprogrammed data-processing system wherein microinstructions can be efficiently read out from a microprogram memory, and which can, therefore, process data at high speed.

## Claims

1. A microprogram sequencer for performing access control of a microprogram memory (18) which stores a plurality of microprogram sequences each formed of predetermined microinstructions, comprising:

register means (50) for storing first address information, which designates that memory location of said microprogram memory (18) in which the initial microinstruction of one of said microprogram sequences is preset,

characterized by further comprising

address-generating means (52, 54, 56, 60), connected to said register means (50), for generating second address information, which designates that memory location of said microprogram memory (18) in which a subsequent microinstruction to said initial microinstruction is preset; and

selecting means (58), connected to said register means (50) and address-generating means (52, 54, 56, 60), for selecting one of said first and second address information, thereby causing said microprogram memory (18) to be accessed by the selected address information.

2. A microprogram sequencer according to claim 1, characterized in that said selecting means includes a control terminal (SEL1) for receiving a selection signal, and a multiplexer (58) for selecting one of the first and second address information, under the control of said selection signal.

3. A microprogram sequencer according to claim 2, characterized in that said address-generating means includes an address memory (54) in which a plurality of items of address information are preset and from which an item of address information is read out in accordance with the first address information, each address information preset in the address memory (54) designating that memory location of said microprogram memory (18) in which the second microinstruction of one of said microprogram sequences is stored.

4. A microprogram sequencer according to claim 3, characterized in that said register means (50) and address-generating means (52, 54, 56, 60) are responsive to the same clock signal.

5. A microprogram sequencer according to claim 4, characterized in that said register means has a first address register (50), for storing the first address information in response to a clock signal, and address-generating means has a second address register (52), for storing said second address information in response to said clock signal.

6. A microprogram sequencer according to claim 5, characterized in that said address-generating means further includes an address counter (60), connected to said second address register (52), for incrementing the value of said second address information, a control terminal (SEL2) for receiving a second selection signal, and a multiplexer (56), connected to receive at least two items of address information read out from said address memory (54) and generated by said address counter (60), for selecting one of the received address information, under the control of said second selection signal, thereby allowing the selected address information to be supplied to the address register (52) thereof.

7. A microprogrammed data-processing system comprising:

a microprogram memory (18) in which a plurality of microprogram sequences are preset, each of said microprogram sequences being formed of predetermined microinstructions;

an instruction register (10) connected to receive a machine code instruction for storing the machine code instruction;

decoder means (12), connected to said instruction register (10), for decoding the machine code instruction to generate first address information, which designates that memory location of said microprogram memory (18) in which the initial microinstruction of one of said microprogram sequences is preset;

register means (50), connected to said decoder means (12), for storing the first address information;

a microinstruction register (20), connected to receive a microinstruction read out from said microprogram memory (18), for storing the received microinstruction; and

processing means (22), connected to said microinstruction register (20), for performing dataprocessing in accordance with the microinstruction stored in said microinstruction register (20);

characterized by further comprising

address-generating means (52, 54, 56, 60), connected to said register means (50), for generating second address information, which designates that memory location of said microprogram memory in which a subsequent microinstruction to said initial microinstruction is preset;

selecting means, connected to said register means and address-generating means, for selecting one of said first and second address information, thereby causing said microprogram memory to be accessed by the selected address information; and

control means, connected to said microinstruction register (20), for controlling the selecting operation of said selecting means, in accordance with the microinstruction stored in said microinstruction register (20).

**FIG. 1**

FROM DATA BUS

INSTRUCTION REGISTER — 10

CLOCK

DECODER — 12

OTHER ADDRESS SOURCE

SEQUENCER — 14

CONTROL LOGIC — 16

(2)

(3)

MICROPROGRAM MEMORY — 18

(4)

MIR — 20
I
CC
BA

FROM DATA BUS

STATUS REGISTER — 28

DATA REGISTER — 24

PROCESSING SECTION — 22

(1)

MEMORY ADDRESS REGISTER — 26

TO OTHER SYSTEM ELEMENTS

TO DATA BUS

TO ADDRESS BUS

FROM DECODER 12

AR 1 — 30    CP

MULTIPLEXER — 34    SEL

32 — AR 2    CP

ADDRESS COUNTER — 36

TO MICROPROGRAM MEMORY 18

**FIG. 2**

| CLOCK CYCLE | 1 | 2 | 3 | 4 | 5 |
|---|---|---|---|---|---|
| AR1 | B | B | C | C | C |
| AR2 | A+1 | A+2 | B | B+1 | B+2 |
| MIR | [A] | [A+1] | [A+2] | [B] | [B+1] |

# F I G. 3

# F I G. 4

| MACHINE CODE INSTRUCTION | MICROINSTRUCTION | MEMORY ADDRESS |
|---|---|---|
| MICROPROGRAM "A" | (A-1)<br>(B-2) | A-1<br>B-2 |
| MICROPROGRAM "B" | [ A ]<br>[ B ]<br>(B+1) | A<br>B<br>B+1 |
| MICROPROGRAM "C" | (A+1)<br>(B+2)<br>(B+3)<br>(B+4) | A+1<br>B+2<br>B+3<br>B+4 |

## F I G. 5A

MICROPROGRAM MEMORY      ADDRESS MEMORY

MICROINSTRUCTION      ADDRESS INFORMATION

ADDRESS      ADDRESS

| ADDRESS | MICROINSTRUCTION |
|---|---|
| A-1 | (A-1) |
| A | [ A ] |
| A+1 | (A+1) |
| A+2 | (A+2) |
| B-2 | (B-2) |
| B-1 | (B-1) |
| B | [ B ] |
| B+1 | (B+1) |
| B+2 | (B+2) |
| B+3 | (B+3) |
| B+4 | (B+4) |

| ADDRESS | ADDRESS INFORMATION |
|---|---|
| A-1 | B-2 |
| A | B |
| A+1 | B+2 |

## F I G. 5C

## F I G. 5B

F I G. 6

0 260 639